# FASCICULE DE BREVET EUROPEEN

(11) **EP 1 918 594 B1**
(45) Date de publication et mention de la délivrance du brevet: **26.12.2012**
(21) Numéro de dépôt: 07301456.5
(22) Date de dépôt: 12.10.2007
(51) Int. Cl.: F16B 7/10, E04F 21/18, B66F 9/08, B66F 11/00

(54) **Dispositif de garnitures de guidage pour colonnes télescopiques en particulier pour appareils élévateurs**
Vorrichtung für Führungsdichtungen an Teleskopsäulen insbesondere von Hebegeräten
Guide fitting device for telescopic columns, in particular for lifting devices

(30) Priorité: 31.10.2006 FR 0654678
(43) Date de publication de la demande: 07.05.2008
(73) Titulaire: Roger Mondelin SAS, 42820 Ambierle (FR)
(72) Inventeur: Bailly, Jean-Marc, 42820, AMBIERLE (FR); Narelli, Denis, 42370, SAINT HAON LE CHATEL (FR); Valette, Christophe, 71340, SAINT BONNET DE CRAY (FR)
(74) Mandataire: Dupuis, François

(56) Documents cités:
- US-B1- 6 223 391

## Description

L'invention se rattache au secteur technique des moyens de guidage d'éléments télescopiques intégrant des appareils élévateurs pour diverses applications, et en particulier dans le domaine du bâtiment et de la construction.

Des éléments télescopiques se trouvent par exemple sur des appareils de levage de panneaux et plaques en vue de les présenter contre des murs et/ou sous plafonds. Les éléments télescopiques se présentent alors sous forme de profilés métalliques ou autres s'emboîtant les uns dans les autres, pour obtenir par exemple un développement maximum des hauteurs sous plafond permettant la pose de panneaux en plâtre ou autres matériaux. La longueur utile de développement est donc de l'ordre de 3 mètres, et plusieurs profilés sont nécessaires. En pratique, il y a un profilé d'assemblage extérieur de configuration généralement en U ou rectangulaire, et le ou les autres profilés intérieurs s'emboîtent les uns dans les autres. Des moyens limiteurs de course sont utilisés pour les deux situations de développement maximum ou de non développement.

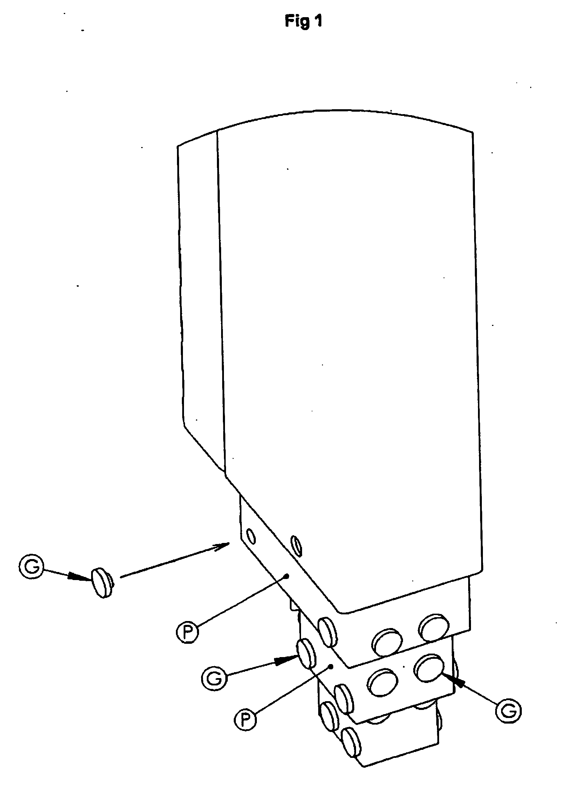

Pour permettre le guidage des profilés télescopiques (P) entre eux, on utilise des garnitures (G) en matériau élastomère. Ces profilés sont alors perforés près de leurs extrémités supérieure et inférieure avec la formation de trous traversant l'épaisseur desdits profilés. susceptible en même temps de s'engager dans le trou correspondant qui lui est affecté. En pratique, chaque garniture est ainsi montée par l'intérieur du profilé, son doigt ou plot servant à la fixation et au positionnement et la face extérieure de la base servant au passage et au guidage du profilé intérieur coulissant. On a ainsi représenté figure 1 une telle garniture avant montage sur un profilé, et ce, au titre de l'art antérieur.

En pratique, pour chaque profilé, il y a 16 garnitures de ce type, 8 disposées en partie supérieure du profilé et 8 en partie inférieure. Si la structure télescopique comprend trois éléments profilés, il y a alors 48 garnitures.

Cette technique est largement utilisée par le Demandeur dans son application particulière pour des appareils de levage et de présentation de panneaux ou plaques, mais aussi par d'autres fabricants. En pratique, l'utilisation de telles garnitures présente de nombreux inconvénients.

Un premier inconvénient réside dans la nécessité de positionner manuellement les différentes garnitures à l'intérieur des profilés considérés, et ce, de manière correcte pour éviter leur enlèvement inopiné, et cela entraîne un temps de montage relativement conséquent.

Un autre inconvénient réside dans le risque élevé d'échappement desdites garnitures de leur logement lors de l'insertion des profilés entre eux, car ces garnitures, en étant en débordement intérieur des parois internes des profilés récepteurs, peuvent constituer des zones de butée et d'accrochage. La poussée exercée sur les profilés entraîne alors leur délogement du trou récepteur et leur perte. Il s'ensuit un déséquilibre de guidage des profilés entre eux. poussée exercée sur les profilés entraîne alors leur délogement du trou récepteur et leur perte. Il s'ensuit un déséquilibre de guidage des profilés entre eux.

En situation d'utilisation de l'appareil élévateur, due aux différentes manipulations, aux vibrations et aux conditions environnementales, dans le cas où les garnitures ont été mal positionnées dans leur logement, il est possible que lesdites garnitures puissent tomber de leur logement avec les risques et les inconvénients précités.

On connait par le brevet US 6223391 un dispositif de fixation de garnitures de guidage pour élements télescopiques pour appareils élevateurs conforme au préambule de la revendication 1

L'ensemble de ces inconvénients a ainsi amené le Demandeur à réfléchir sur un nouveau type de garnitures pour éléments télescopiques qui soit plus sécurisant, plus facile à monter et démonter, et surtout sans risque échappatoire.

Les recherches initiales se sont orientées sur la possibilité de fixer de façon améliorée les garnitures de guidage utilisées selon l'art antérieur par une optimisation de l'ancrage par des configurations de clipsage des doigts dans leur logement, ou par une fixation par collage ou matériau auto agrippant sur la face interne ou externe des profilés. Une autre piste de recherche a été d'agencer les profilés aux endroits récepteurs avec des rainurages spécifiques, mais cela exigeait des travaux d'usinage inappropriés.

Toutes ces pistes de recherche ont été abandonnées, car inappropriées, peu efficaces, quelquefois difficiles à mettre en oeuvre et coûteuses.

La solution apportée par le Demandeur va dans un sens différent à l'encontre de la pratique actuelle, et apporte une simplification dans le montage, une rapidité dans celui-ci, une sécurité avec impossibilité d'échappement des logements, tout en étant économiquement peu coûteuse.

Selon une première caractéristique, le dispositif de fixation de garnitures de guidage pour éléments télescopiques est remarquable en ce qu'il comprend des jeux de deux sous-ensembles de garnitures de profil correspondant au profil intérieur supérieur et extérieur inférieur de chaque élément télescopique en formant un embout monobloc et comprenant un ceinturage intérieur et extérieur pour venir coopérer avec les chants d'extrémité frontaux supérieur et inférieur dans la cavité intérieure dudit élément profilé télescopique pour le guidage supérieur et sur l'extérieur dudit élément profilé télescopique pour le guidage inférieur, et en ce que l'embout constituant chaque garniture est aménagé sur son ceinturage intérieur avec des découpes (11d) et (12d) recevant chacune un plot (11e) et (12e) s'intégrant dans les ouvertures formant logement établies en regard sur les parties supérieure et inférieure du profilé télescopique correspondant, et en ce que autour de ces découpes recevant des plots, est disposée une zone d'appui et de guidage (11c) et (12c) d'un autre profilé, et en ce que le ceinturage (11b) présente intérieurement deux parties de parois (11c) verticales situées autour des plots susceptibles de constituer des zones d'appui et de guidage d'un autre profilé, et en ce que sur ledit ceinturage et par l'extérieur sont prévues des zones d'appui (12c) et de guidage externe contre la paroi intérieure en regard du profilé et qui sera susceptible d'entourer celui récepteur de l'embout.

Ces caractéristiques et d'autres encore ressortiront bien de la suite de la description.

Pour fixer l'objet de l'invention illustrée d'une manière non limitative aux figures des dessins où :
- la figure 2 est une vue en perspective du dispositif de guidage selon l'invention dans sa version adaptée pour la partie supérieure des profilés télescopiques.
- la figure 2a est une vue en coupe selon la ligne A-A de la figure 2.
- la figure 3 est une vue en perspective du dispositif de garnitures de guidage selon l'invention dans sa version adaptée pour la partie inférieure des profilés, ladite version présentant une forme fonctionnalité équivalente à la mise en oeuvre des garnitures pour la partie supérieure des profilés télescopiques.
- la figure 3a est une vue en coupe selon la ligne B-B de la figure 3.

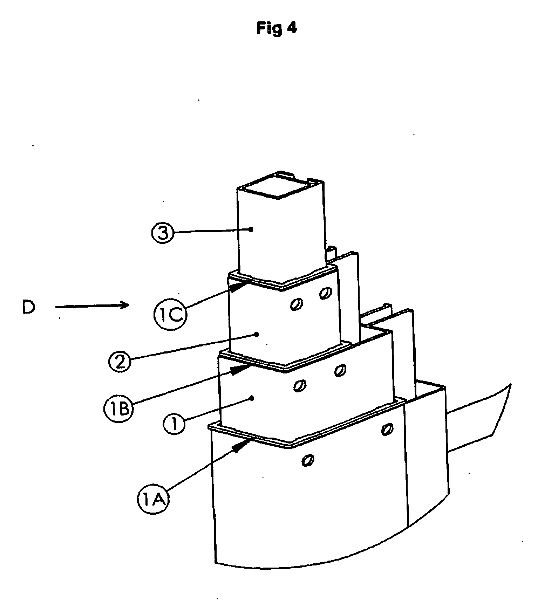

- la figure 4 est une vue partielle de plusieurs profilés télescopiques assemblés avec la mise en oeuvre de garnitures d'assemblage en partie haute desdits profilés.

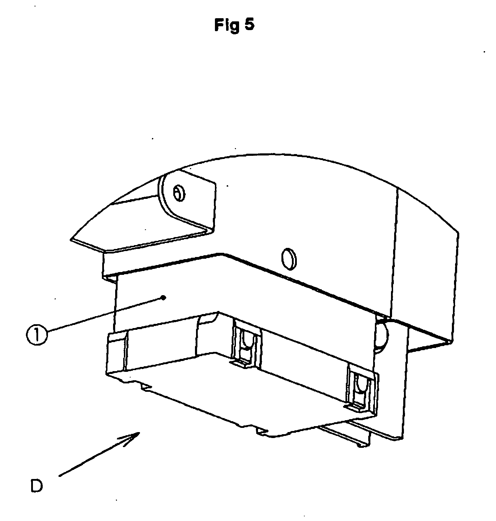

- la figure 5 est une vue partielle montrant l'assemblage des garnitures en partie inférieure d'éléments télescopiques.

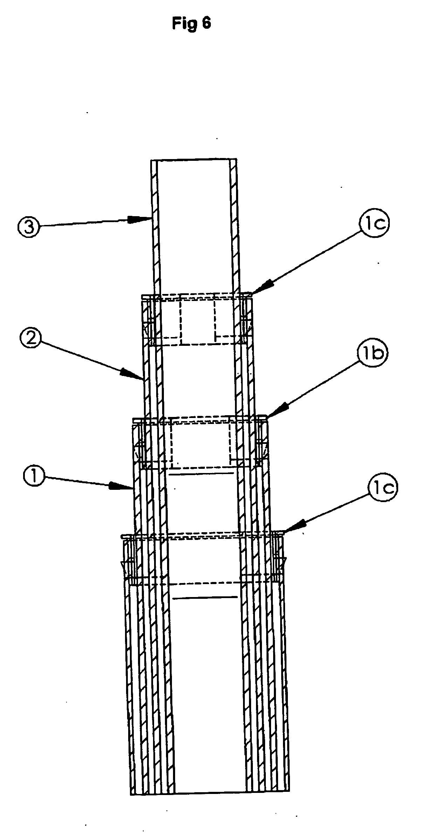

- la figure 6 est une vue partielle et en coupe de l'assemblage des profilés télescopiques avec les garnitures de guidage selon la figure 4.

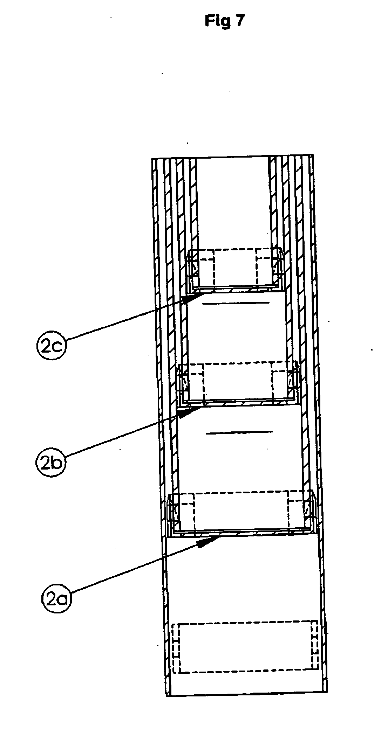

- la figure 7 est une vue partielle et en coupe de l'assemblage des profilés télescopiques avec leur garniture de guidage selon la figure 5.

Afin de rendre plus concret l'objet de l'invention, on le décrit maintenant d'une manière non limitative illustrée aux figures des dessins.

Le dispositif de garniture de guidage (D) selon l'invention peut s'appliquer à tout ensemble et appareil incluant des éléments télescopiques sous forme de profilés métalliques par exemple. Ces appareils peuvent être par exemple des appareils de levage et de manutention de panneaux ou plaques de grandes dimensions destinés à être présentés et positionnés sur des murs ou plafonds de tout type de construction. Ces éléments télescopiques peuvent être en nombre variable en fonction de la capacité d'élévation des appareils considérés, et aussi de la longueur de chaque élément télescopique. On a par ailleurs représenté un exemple de profilés télescopiques en matériau métallique ou autre avec un profil rectangulaire ouvert et / ou fermé selon les applications.

Le dispositif de garnitures de guidage selon l'invention est ainsi profilé pour s'adapter étroitement à la configuration dimensionnelle et géométrique des éléments télescopiques récepteurs. On a ainsi représenté un dispositif de garnitures de guidage selon l'invention avec des ensembles de garniture supérieure et inférieure de configuration rectangulaire pour s'adapter aux formes complémentaires des profilés télescopiques rectangulaires dans l'exemple illustré.

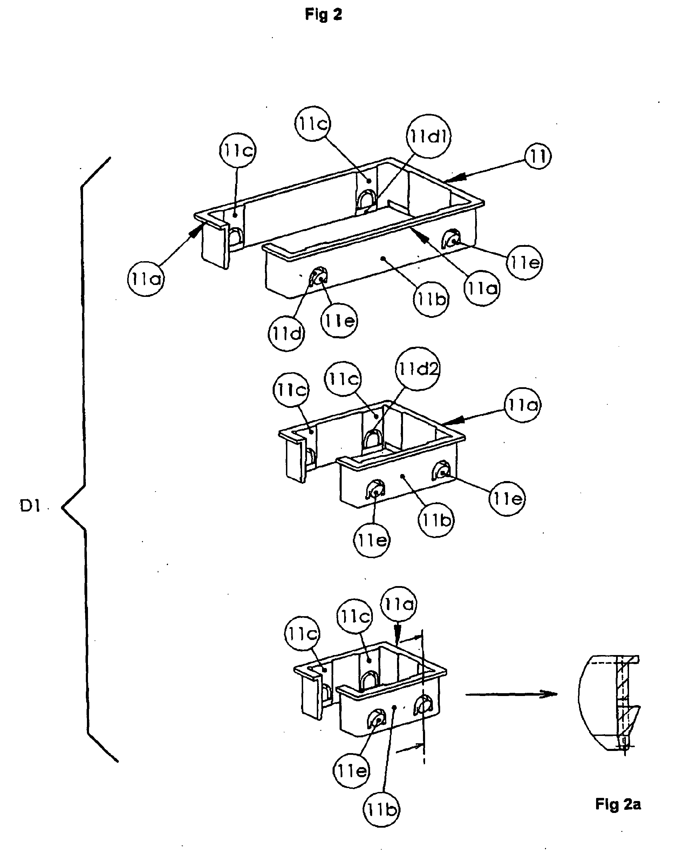

Le dispositif de garnitures de guidage est référencé dans son ensemble par (D) et comprend un premier sous-ensemble de garnitures (D1) destinées à être positionnées et fixées à partir des chants frontaux supérieurs (1a) (2a) (3a) des éléments télescopiques (1) (2) et (3), et un sous-ensemble de garnitures (D2) destinées à être positionnées et fixées à partir des chants frontaux inférieurs (1b) (2b) (3b) desdits éléments télescopiques (1) (2) et (3). Chaque sous-ensemble (D1) (D2) comprend un nombre de garnitures de guidage en fonction du nombre d'éléments télescopiques existant dans l'appareil, mais chaque garniture a la même configuration fonctionnelle pour chaque sous-ensemble, seules les différences dimensionnelles apparaissant. On décrira par la suite une seule garniture de guidage supérieure et une seule garniture de guidage inférieure. On se réfère ainsi à la figure 2 pour la représentation d'un jeu de trois garnitures de guidage supérieur selon l'invention. Chaque garniture (11) est susceptible de constituer un embout monobloc en matériau plastique destiné à être enfilé à partir du chant frontal supérieur du profilé télescopique considéré. Cet embout est fermé ou ouvert partiellement en fonction de la configuration du profilé. En l'espèce, le profilé présentant une forme rectangulaire avec une ouverture de passage sur un côté, l'embout est réalisé de manière identique. L'embout (11) présente une bordure (11a) supérieure d'appui sur le rebord périphérique récepteur du profilé et un ceinturage (11b) périphérique inférieur perpendiculaire du rebord et étant susceptible d'être emboîté dans le profilé récepteur. Ce ceinturage (11b) présente intérieurement sur chaque face deux parties de parois (11c) verticales susceptibles de constituer des zones d'appui et de guidage d'un autre profilé. A l'intérieur de chacune d'elle, sont prévues dans l'épaisseur du ceinturage des ouvertures (11d) en demi-lune par exemple avec une ligne de base (11d1) horizontale et au-dessus une configuration semi-circulaire (11d2). A chaque ouverture (11d) est associé un plot (11e) qui est relié lors de la fabrication à la ligne de base (11d1) et s'intégrant dans le logement ainsi réalisé de ladite ouverture. Ce plot est par exemple découpé dans la matière de l'embout pour être conformé lors de la fabrication de l'embout, celui-ci étant obtenu par thermoformage notamment. Chaque plot a donc une capacité élastique de pivotement en étant soit vertical intégré dans l'ouverture (11d) lors de l'insertion de l'embout dans le profilé par le contact avec la face en regard interne du profilé, soit en s'écartant radialement vers l'extérieur lorsque le plot se trouve face à l'ouverture (11d) réceptrice, n'étant plus alors retenu. On comprend ainsi qu'il y a un verrouillage en position lorsque l'embout est monté. Ainsi, selon la mise en oeuvre, les différents plots ne gênent absolument pas la partie de guidage (1 c) en étant séparés de celle-ci. Chaque garniture de guidage réalisée sous forme d'embout comprend huit plots disposés deux à deux dans les partie d'angle de chaque embout et on obtient ainsi deux plots par face, et ce, pour un guidage complet. La mise en place de ces jeux de garnitures est donc particulièrement aisée.

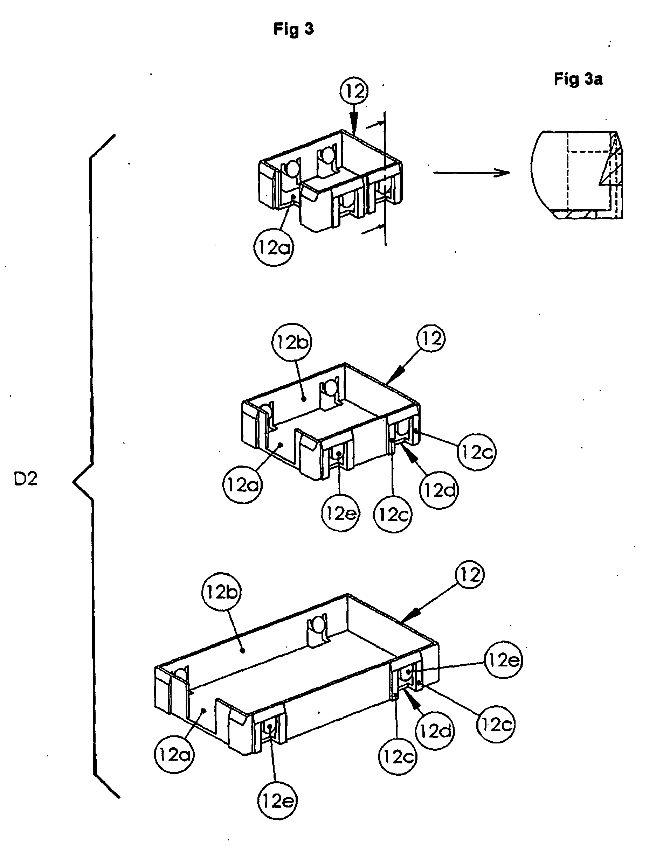

Si l'on se réfère maintenant à la figure 3, on décrit une seule garniture de guidage du second sous-ensemble (D2). De manière similaire, chaque garniture inférieure est constituée par un second embout (12) dont le profilé correspondant vient s'emmancher à l'intérieur dudit embout. Ledit second embout comprend une face de fond (12a) et un ceinturage périphérique (12b) fermé ou partiellement ouvert selon la configuration du profilé télescopique récepteur. Sur ledit ceinturage et par l'extérieur sont prévues des zones d'appui (12c) et de guidage externe contre la paroi intérieure en regard du profilé et qui sera susceptible d'entourer celui récepteur de l'embout. A l'intérieur de ces zones d'appui sont disposées des ouvertures (12d) traversant dans l'épaisseur de l'embout et à partir desquelles des plots (12e) sont conformés et articulés pour venir se positionner dans les ouvertures ainsi conformées à cet effet sur le profilé. La mise en oeuvre est similaire à celle décrite pour les garnitures supérieures. Lesdits plots sont ainsi reliés par une ligne d'attache et de jonction avec la partie haute desdites ouvertures (12d).

Ainsi, ce second embout reçoit la partie du profilé télescopique et les plots viennent se loger et verrouiller en position le second embout dans le profilé récepteur considéré. Le second embout comprend lui aussi huit plots disposés deux à deux dans les parties d'angle de chaque embout (12) avec deux plots par face, et ce, pour un guidage complet.
La mise en place des deux embouts (11) et (12) est donc en elle-même suffisante pour que le dispositif de garnitures de guidage selon l'invention offre de multiples avantages.

Pour un appareil télescopique à trois profilés selon l'art antérieur, on utilisait 48 garnitures avec les inconvénients rappelés dans le préambule de la description. Selon l'invention, il suffit de trois garnitures supérieures (D1) et trois garnitures inférieures (D2) pour assurer un même résultat avec une meilleure sécurité d'utilisation.

Les garnitures sont réalisées en matière plastique par thermoformage par exemple, avec donc des coûts de fabrication peu élevés. La mise en place est très rapide. Il n'y a pas de risque de perte et donc de rupture de guidage, puisque les garnitures sont elles-mêmes verrouillées en position par les plots correspondants. Il faut pour les déverrouiller assurer un effort spécifique et dégager lesdits plots de la zone de logement. En pratique, il faudrait exercer des efforts similaires sur les quatre plots, ce qui est donc inconcevable. La sécurité est donc largement améliorée.

## Revendications

1. Dispositif de fixation de garnitures de guidage pour éléments télescopiques pour appareils élévateurs, du type où les éléments télescopiques sont agencés à leur partie supérieure et inférieure avec des ouvertures formant logement de plots d'ancrage conformés sur les garnitures de guidage, chaque plot étant articulé et lié au ceinturage pour s'intégrer et se positionner par déformation élastique dans une ouverture formée sur l'élément télescopique concerné, **caractérisé en ce qu'**il comprend des jeux de deux sous-ensembles (D1) (D2) de garnitures (11) (12) de profil correspondant au profil intérieur supérieur et extérieur inférieur de chaque élément télescopique (1) (2) et (3) en formant un embout monobloc et comprenant un ceinturage intérieur (11b) et extérieur (12b) pour venir coopérer avec les chants d'extrémité frontaux supérieur et inférieur dans la cavité intérieure dudit élément profilé télescopique pour le guidage supérieur et sur l'extérieur dudit élément profilé télescopique pour le guidage inférieur, et **en ce que** l'embout constituant chaque garniture est aménagé sur son ceinturage intérieur avec des découpes (11d) et (12d) recevant chacune un plot (11e) et (12e) s'intégrant dans les ouvertures formant logement établies en regard sur les parties supérieure et inférieure du profilé télescopique correspondant, et **en ce que** autour de ces découpes recevant des plots, est disposée une zone d'appui et de guidage (11c) et (12c) d'un autre profilé, **en ce que** le ceinturage (11b) présente intérieurement deux parties de parois (11c) verticales situées autour des plots susceptibles de constituer des zones d'appui et de guidage d'un autre profilé, et **en ce que** sur ledit ceinturage et par l'extérieur sont prévues des zones d'appui (12c) et de guidage externe contre la paroi intérieure en regard du profilé et qui sera susceptible d'entourer celui récepteur de l'embout.

2. Dispositif selon la revendication 1, **caractérisé en ce que** l'embout (11) présente une bordure (11a) supérieure d'appui sur le rebord périphérique récepteur du profilé et un ceinturage (11b) périphérique inférieur perpendiculaire du rebord et étant susceptible d'être emboîté dans le profilé récepteur, et **en ce que** à l'intérieur des parois verticales (11c), sont prévues dans l'épaisseur du ceinturage des ouvertures (11d) en demi-lune avec une ligne de base (11d1) horizontale et au-dessus une configuration semi-circulaire (11d2), et **en ce que** à chaque ouverture (11d) est associé un plot (11e) qui est relié lors de la fabrication à la ligne de base (11d1) et s'intégrant dans le logement ainsi réalisé de ladite ouverture, et **en ce que** chaque plot a une capacité élastique de pivotement.

3. Dispositif selon la revendication 1, **caractérisé en ce que** à l'intérieur du second embout (12) est emmanché le profilé correspondant, et **en ce qu'**il comprend une face de fond (12a) et un ceinturage périphérique (12b) fermé ou partiellement ouvert selon la configuration du profilé télescopique récepteur, et **en ce que** de part et d'autre de cette zone d'appui sont disposées des ouvertures (12d) traversant dans l'épaisseur de l'embout et à partir desquelles des plots (12e) sont conformés et articulés pour venir se positionner dans les ouvertures ainsi conformées à cet effet sur le profilé, et **en ce que** les plots ont une capacité élastique de pivotement.

4. Dispositif selon l'une quelconque des revendications 1 à 3, **caractérisé en ce que** chaque embout (11) (12) comprend huit plots situés deux à deux dans les parties d'angle de l'embout, deux plots étant disposés sur chaque face.

5. Dispositif selon l'une quelconque des revendications 1 à 4, **caractérisé en ce que** les garnitures (11) et (12) sont réalisées en matière plastique monobloc et par thermoformage.

## Claims

1. Device for attaching guide fittings for telescopic elements for lifting equipment, of the type that has telescopic elements provided at the upper and lower part thereof with openings forming a housing for anchoring studs that are formed on the guide fittings, each stud being articulated and connected to the girdling so that it can be fitted and positioned by elastic deformation in an opening formed on the telescopic element concerned, **characterised in that** it includes sets of two subassemblies (D1) (D2) of fittings (11) (12) with a profile matching the upper inner and lower outer profile of each telescopic element (1) (2) and (3) forming a monoblock end piece and including an inner (11b) and outer (12b) girdling so as to co-operate with the upper and lower frontal end surfaces in the inner cavity of said profiled telescopic element for the upper guiding and on the outside of said profiled telescopic element for the lower guiding, and **in that** the end piece constituting each fitting is provided on its inner girdling with cuts (11d) and (12d) each accommodating a stud (11e) and (12e) fitting into the housing-forming openings provided opposite on the upper and lower parts of the corresponding telescopic section, and **in that**, around these stud-accommodating cuts, is placed a bearing and guide zone (11c) and (12c) for another section, **in that** the girdling (11b) has internally two vertical wall parts (11e) located around the studs capable of constituting bearing and guide zones for another section, and **in that** on said girdling and on the outside are provided external bearing and guide zones (12c) against the opposite-facing inner wall of the section, which will be capable of surrounding the section receiving the end piece.

2. Device as claimed in claim 1, **characterized in that** the end piece (11) has an upper edge (11a) bearing on the receiving peripheral flange of the section and a lower peripheral girdling (11b) perpendicular to the flange and capable of being fitted into the receiving section, and **in that**, inside vertical walls (11c), are provided in the thickness of the girdling half-moon shaped openings (11d) with a horizontal baseline (11d1) and above, a semi-circular configuration (11d2), and **in that** with each opening (11d) is associated a stud (11e) which is connected at manufacture to the baseline (11d1) and fits into the housing so made from said opening, and **in that** each stud has elastic swivel capability.

3. Device as claimed in claim 1, **characterized in that** inside the second end piece (12) is fitted the corresponding section, and **in that** it includes a bottom surface (12a) and a closed or partially open peripheral girdling (12b) depending on the general shape of the receiving telescopic section, and **in that** on either side of this bearing zone are placed openings (12d) passing through the thickness of the end piece and from which studs (12e) are formed and articulated so that they are able to position themselves in the openings formed to this end on the section, and **in that** the studs have elastic swivel capability.

4. Device as claimed in any one of claims 1 to 3, **characterized in that** each end piece (11) (12) comprises eight studs placed in twos in the corner parts of the end piece, two studs being arranged on each face.

5. Device as claimed in any one of claims 1 to 4, **characterized in that** the fittings (11) and (12) are made of monoblock plastic material by thermal compression moulding.

## Patentansprüche

1. Vorrichtung für die Befestigung von Führungsbeschlägen für Teleskopelemente für Hebegeräte nach Art derjenigen, bei denen die Teleskopelemente in ihrem oberen und unteren Teil mit Öffnungen als Sitz von auf den Führungsbeschlägen ausgeformten Verankerungsnasen versehen sind, wobei jede Nase angelenkt und mit der Umrandung fest verbunden ist, um sich durch elastische Verformung in eine Öffnung an dem betroffenen Teleskopelement einzufitlgen und zu positionieren, **dadurch gekennzeichnet, dass** sie zwei Baugruppen-Sätze (D1)(D2) von Beschlägen (11) (12) mit einem Profil umfasst, das dem oberen Innen- bzw. unteren Außenprofil jedes Teleskopelements (1, 2 und 3) entspricht und dabei ein einstückiges Anschlussstück bildet und eine Innen- (11b) bzw. Außenumrandung (12b) besitzt, um mit den oberen bzw. unteren stirnseitigen Endschmalseiten in der Innenkavität des besagten Teleskopelementprofils für die obere Führung bzw. an der Außenseite des besagten Teleskopelementprofils für die untere Führung zusammenzuwirken, und dass das jeden Beschlag bildende Anschlussstück an seiner inneren Umrandung mit Ausschnitten (11d und 12d) ausgebildet ist, die jeweils eine Nase (11e und 12e) aufweisen, die sich in die den Lagersitz bildenden Öffnungen einfügt, die ihnen gegenüberliegend am oberen und unteren Teil des entsprechenden Teleskopprofils ausgebildet sind, und dass um diese die Nasen tragenden Ausschnitte herum eine Abstütz- und Führungszone (11c und 12c) für ein anderes Profilteil angeordnet ist, und dass die Umrandung (11b) innen um die Nasen herum zwei senkrechte Wandteile (11c) aufweist, die geeignet sind, Abstütz- und Führungszonen für ein anderes Profilteil zu bilden, und dass außen an der besagten Umrandung Zonen für die Auflage und äußere Führung (12c) an der gegenüberliegenden Innenwand des Profilteils vorgesehen sind, das dadurch geeignet ist, das das Anschlussstück aufnehmende Profilteil zu umgeben.

2. Vorrichtung nach Anspruch 1, **dadurch gekennzeichnet, dass** das Anschlussstück (11) einen oberen Rand (11a), der auf der Außenkante des Profilteils aufliegt, und eine untere periphere Umrandung (11b) aufweist, die senkrecht zur Kante verläuft und in das Aufnahmeprofil gesteckt werden kann, und dass innerhalb der senkrechten Wände (11c) der Umrandung halbmondförmige Öffnungen (11d) mit einer horizontalen Grundlinie (11d1) und darüber einer Halbkreisform (11d2) vorgesehen sind, und dass jeder Öffnung (11d) eine Nase (11e) zugeordnet ist, die bei der Herstellung eine feste Verbindung mit der Grundlinie (11d1) bildet und sich in dem auf diese Weise realisierten Sitz der besagten Öffnungen befindet, und dass jede Nase elastisch drehbar ist.

3. Vorrichtung nach Anspruch 1, **dadurch gekennzeichnet, dass** in das zweite Anschlussstück (12) das entsprechende Profilteil aufgesteckt ist, und dass es eine Bodenfläche (12a) und je nach Form des aufnehmenden Teleskopprofils eine geschlossene oder teilweise geöffnete periphere Umrandung (12b) umfasst, und dass beiderseits dieser Auflagezone Öffnungen (12d) angeordnet sind, die das Anschlussstück in der Materialdicke durchqueren und von denen aus Nasen (12e) ausgeformt und angelenkt sind, um sich in die zu diesem Zweck am Profilteil ausgeformten Öffnungen zu positionieren, und dass die Nasen elastisch drehbar sind.

4. Vorrichtung nach einem der Ansprüche 1-3, **dadurch gekennzeichnet, dass** jedes Anschlussstück (11) (12) acht Nasen umfasst, die paarweise in den Winkelteilen des Anschlussstücks sitzen, wobei auf jeder Seitenfläche zwei Nasen angeordnet sind.

5. Vorrichtung nach einem der Ansprüche 1-4, **dadurch gekennzeichnet, dass** die Beschläge (11 und 12) durch Warmformen in einem Stück aus Kunststoff hergestellt sind.
